# EUROPEAN PATENT APPLICATION

(11) **EP 4 475 428 A1**
(43) Date of publication of application: **11.12.2024**
(21) Application number: 23178473.7
(22) Date of filing: 09.06.2023
(51) Int. Cl.: H02S 20/10

(54) **SYSTEM FOR SUPPORTING SOLAR PANELS AND CLAMP FOR CONNECTING SOLAR PANEL TO SUPPORTING WIRE**

(71) Applicant: Siguesol, 4190 Werbomont (BE)
(72) Inventor: CORBESIER, Thomas, 4130 Comblain au Pont (BE); MATHONET, Noé, 4052 Beaufays (BE); CAPRARA, Roxane, 4180 Hamoir (BE)
(74) Representative: Calysta NV

(57) **Abstract**

System (1, 1b) for supporting solar panels in vertical position, comprising: a first supporting wire (5a) extending between the first vertical support and the second vertical support, a second supporting wire (6a) extending between the first vertical support and the second vertical support, wherein the second supporting wire is arranged substantially below the first supporting wire; a first upper clamp (11a), comprising: a wire opening (21, 31, 41, 101) for the first supporting wire, and a panel clamping section (22, 32, 42, 102) clamping an upper surface of a solar panel, a first lower clamp (12a), comprising: a wire opening for the second supporting wire, and a panel clamping section, clamping a lower surface of the solar panel.

## Description

The present invention relates to the field of renewable energy, in particular solar energy that can be harvested using solar panels, e.g. PV (photo-voltaic) panels. The invention relates in particular to systems for supporting solar panels having in particular a clamp for connecting the solar panel to a supporting wire. The systems can e.g. be arranged on agricultural fields.

It is well known that conventional sources for producing electricity while emitting greenhouse gasses, contribute to global warming and are limited in availability in the long term. Renewable energy sources can provide a solution for those problems. One of the renewable energy sources that has much potential, is solar energy. Solar energy can e.g. be harvested using solar panels, and when those solar panels are PV panels the solar energy can be converted to electricity.

The amount of solar energy that is harvested with solar panels depends on how much solar energy can be received by the solar panels. This, in turn, depends on the surface of the solar panels as well as their orientation. To increase the amount of solar energy that can be harvested, more and more solar panels are being placed. It can e.g. be advantageous to arrange solar panels on agricultural fields, which is also referred to as agri(photo)voltaics.

In addition, bifacial solar panels are being placed more often. These bifacial solar panels are able to convert solar energy into electricity, both when solar radiation is received on the front side as when solar radiation is received on the rear side. To optimize the reception of solar radiation by these bifacial solar panels, they are usually arranged vertically. This is in particular advantageous because the vertically arranged bifacial solar panels generate most electricity when the sun is lower, so in the morning and evening hours. This it the time period during which the consumption of electricity is the highest. The supply and demand of electricity are as such more aligned, reducing the need for storing/buffering electricity. Systems for supporting solar panels are usually provided to support the solar systems. These systems are directly or indirectly supported by a supporting surface, e.g. a ground surface or a roof. The inventors have found that existing support systems are not always satisfactory, in particular when supporting wires are used and/or when the solar panels are arranged vertically.

It is an object of the invention to overcome disadvantages of the prior art, or at least provide an alternative to the prior art. It is in particular an object of the invention to provide improvements for supporting solar panels vertically and/or for connecting solar panels to supporting wires.

This object is achieved with a system for supporting at least one solar panel (optionally in a vertical position), comprising
- optionally, a first vertical support,
- optionally, a second vertical support,
- a first supporting wire, optionally extending between the first vertical support and the second vertical support,
- a second supporting wire, optionally extending between the first vertical support and the second vertical support, wherein optionally the second supporting wire extends substantially parallel to the first supporting wire, and optionally is arranged substantially below the first supporting wire,
- at least a first upper clamp, comprising:
   - a wire opening through which the first supporting wire extends, and
   - a panel clamping section, configured to clamp an upper surface of a solar panel,
- at least a first lower clamp, comprising:
   - a wire opening through which the second supporting wire extends, and
   - a panel clamping section, configured to clamp a lower surface of the solar panel.

The invention thus relates to a system for supporting at least one solar panel. The solar panel can e.g. be PV (photo-voltaic) panels, being configured to convert solar energy into electricity. The system can e.g. be configured be arranged on a ground surface that is substantially flat. For example, the system can be configured be arranged on a ground surface that is part of an agricultural field.

Optionally, the system is configured to support the solar panel in a vertical position. The solar panel being arranged in a vertical plane, entails that the longitudinal axis of the solar panel extends in a vertical plane (although it will be understood that small deviations thereof can occur). Depending on whetherthe solar panel is arranged in landscape of portrait arrangement, the longitudinal axis can extend in horizontal direction or vertical direction, respectively. Optionally, the solar panel is a bifacial solar panel.

The system optionally comprises at least a first and a second vertical support. It will in general be assumed in the following explanation that the first and second vertical support are present as described; however, it will be understood that the invention can be applied to any system comprising a first and second supporting wire for supporting the solar panels.

The first and second vertical support extend in a vertical direction. Within the context of this document, when it is mentioned that an element extends in a certain direction, it is meant that the longitudinal direction of said element extends in said direction, unless explicitly specified otherwise. It will further be understood that when it is mentioned that an element extends in a certain direction, it is meant that it substantially extends in said direction. Small deviation may occur, e.g. because of manufacturing tolerances, constructions inaccuracies, or deviating ground surfaces. For example, substantially extending in a certain direction, may include deviations of +/- 15 degrees or less of said direction, e.g. deviations of +/- 10 degrees or less of said direction, e.g. deviations of +/- 5 degrees or less of said direction, e.g. deviations of +/- 1 degree or less of said direction.

It is further noted that when relative terms such as "upper", "lower", "vertical", "horizontal" and similar are used herein, this relates to the situation when the system is installed in a standard situation.

The first and second vertical support can e.g. extend until a first height above the ground level. The ground level generally is the level of the surface onto which the system is arranged. When the system is arranged on an agricultural field, the ground level may relate to the soil. When the system is arranged on a cemented surface, the ground level is said cemented surface. When the system is arranged on a roof, the ground level is said roof. The ground level is generally a fixed level. Thus, when the system is arranged on a non-flat surface, a fixed level for the ground level can be selected. This can e.g. the level of said surface below the first short vertical support.

In some embodiments, the first and second vertical support can be arranged into the ground. In case the ground surface is not flat, this may be resolved by arranging one of the first and second short vertical support deeper into the ground than the other. It may also be resolved by manufacturing one of them to be longer than the other. As such, it can be achieved that both extend until the first height above the ground level, if desired. In other embodiments, the first and second short vertical support and the first and second long vertical support can be arranged onto/into a foundation. In those cases, a non-flat ground surface can also be compensated by the foundation.

The distance (in horizontal direction) between the first and second vertical supports depends on the number of solar panels to be arranged between them, but can e.g. be between 1-4 meters, e.g. between 2-3 meters.

The system further comprises a first supporting wire and a second supporting wire. The supporting wires can e.g. be steel wires, steel cables, wire ropes, or guys stra nds.

The first supporting wire optionally extends between the first vertical support and the second vertical support. However, it will be understood that the invention can also be applied to system where the first supporting wire extends between other elements, thus not directly between the first and second vertical support.

In some embodiments, the first supporting wire may have a first and/or second end being attached to the first and/or second vertical support, respectively. In some embodiments, the first supporting wire may extend through the first and/or second vertical support, e.g. through a hole or wire opening in the first and/or second vertical support.

The second supporting wire can in embodiments also extend between the first and second vertical support. This can e.g. be embodied in similar ways as the first supporting wire, e.g. being attached to or extending through the first/second vertical support. Optionally, the first and second supporting wire extend substantially parallel to each other, e.g. substantially in horizontal direction. Optionally, the second supporting wire is arranged substantially below the first supporting wire. As explained in more detail below, this allows to clamp a solar panel from above and below to support the solar panel in a vertical position.

In some embodiments, it is possible that the second supporting wire does not extend between the first and second vertical support. Instead, the second supporting wire may e.g. extend between a third and a fourth vertical support. It is also not required that the second supporting wire is arranged substantially below the first supporting wire. These embodiments can e.g. be advantageous when the system is configured to support the solar panel in a non-vertical position. For example, the system is configured to support the solar panel in a tilted position, e.g. at an angle of 10-30 degrees, e.g. 15-25 degrees, to the horizontal. A tilted position may be advantageous when the solar panel is not a bifacial solar panel.

The first and/or second supporting wire may e.g. extend substantially in horizontal direction.

The system further comprises at least a first upper clamp and at least a first lower clamp. The upper clamp can be connected to the first supporting wire wire, and the lower clamp can be connected to the second supporting wire. The first upper clamp may be configured to engage an upper surface of the solar panel, and the first lower clamp may be configured to engage a lower surface of the solar panel.

Within this context, the upper surface and the lower surface of the solar panel are the side surfaces that are arranged on top and bottom, respectively. In most cases, the solar panel can e.g. be considered to have six surfaces, being a front surface, back surface, and four side surfaces. The four side surfaces can be an upper surface, a lower surface, a left surface, and a right surface. Usually at least the front surface comprises PV-cells, and in case of the bifacial also the rear surface. The upper and lower surface normally do not comprise PV-cells.

By engaging the upper surface and the lower surface, the solar panel can be clamped between the first upper clamp and the first lower clamp. This advantageously holds the solar panels in the desired position. The use of the wire has several advantages. The wire can be embodied relatively thin compared to traditional support rails, and therefore cause less shadow. Shadow may be disadvantageous because it reduces the available solar radiation to convert to electricity. Being thinner, the wire also results in reduced cost for production and transportation.

The arrangement wherein the solar panel is clamped between the upper and lower clamps, is advantageous because the position of the solar panel is well-defined. At the same time, in embodiments, the first and second supporting wire may be configured to be movable relative first and second vertical support, for example up to a predetermined angle, e.g. up to 10 degrees, e.g. up to 5 degrees, e.g. up to 2 degrees. This may be advantageous as it allows small movements of the solar panel due to wind forces to reduce to load and internal stresses, while at the same time avoiding that the solar panel is taken too much out of position.

In embodiments, the first upper clamp comprises a wire opening through which the first supporting wire extends, and a panel clamping section, configured to clamp an upper surface of a solar panel. In embodiments, the first lower clamp comprises a wire opening through which the second supporting wire extends, and a panel clamping section, configured to clamp a lower surface of the solar panel. The first upper and/or lower clamps may thus be directly connected to the first or second supporting wire, respectively, on the one hand, and to solar panel, on the other hand. It is avoided that intermediate components are required. Moreover, by using separate upper and lower clamps, it also avoided that large components (for engaging both the upper and lower surface of the solar panel at the same time) are required. This reduces the amount of required material, and thus costs of production, cost of transportation, loads of the vertical supports, etc.

In embodiments, the system further comprises a second upper clamp configured to engage the upper surface of the solar panel; and/or a second lower clamp configured to engage the lower surface of the solar panel. Optionally, the second upper clamp is embodied similarly to the first upper clamp, e.g. comprising a wire opening through which the first supporting wire extends, and a panel clamping section, configured to clamp the upper surface of the solar panel. Optionally, the second lower clamp is embodied similarly to the first lower clamp, e.g. comprising a wire opening through which the second supporting wire extends, and a panel clamping section, configured to clamp the lower surface of the solar panel.

Using four clamps (two upper clamps and two lower clamps) may be particularly advantageous to hold the solar panel stable, while avoiding the use of many clamps (and thus more material). However, it will be understood that using more clamps may also be possible, and may also depend on the size of the solar panel.

In embodiments, the first upper clamp, the second upper clamp, the first lower clamp, and the second lower clamp are configured to engage the solar panel on symmetrical clamping locations, and together clamp the solar panel, e.g. in the vertical position. The symmetrical clamping location can e.g. be symmetrical in view of a centre point of the solar panel, and/or in view of a longitudinal axis of the solar panel, and/or in view of a centre axis of the solar panel that is perpendicular to the longitudinal axis. Symmetrical clamping results in a more symmetrical division of loads, forces, and stresses.

In embodiments, the first (and optionally second) upper clamp and the first and (optionally second) lower clamp are embodied similarly, wherein e.g. the first lower clamp is arranged upside-down when compared to the first upper clamp.

In embodiments, the first lower clamp comprises a second panel clamping section, configured to clamp an upper surface of a second solar panel. The second solar panel can e.g. be arranged below the second supporting wire, optionally between the second supporting wire and a third supporting wire. The third supporting wire can e.g. extend between the first vertical support and the second vertical support, wherein the third supporting wire extends substantially parallel to the first and second supporting wire and is arranged substantially below the first and second supporting wire. A further lower clamp may be configured to engage a lower surface of the second solar panel, e.g. with a panel clamping section. Optionally, the further lower clamp comprises a wire opening through which the third supporting wire extends.

In embodiments, the solar panel is a bifacial solar panel. A bifacial solar panel is a solar panel that is able to produce electricity from solar radiation received on the front surface and solar radiation received on the rear surface. The bifacial solar panel may e.g. comprise one or more bifacial solar cells. The bifacial solar panel may be advantageous when used in a vertical position.

In embodiments, the system may comprise one or more solar panels.

In embodiments, the first and second vertical support are made from wood. The wood is preferably a type of wood available relatively close to the place where the system is to be installed. The wood can e.g. be robinia wood (Robinia pseudoacacia). This may be an advantageous type of wood because it requires little to no prior treatment. It may in particular be advantageous to be used e.g. in Europe, because it grows in this region. The wood may e.g. be pine. The wood may e.g. be teak wood, which is advantageous because it requires little to no prior treatment.

When it is said that they are made from wood, it will be understood that wood may be the main material in the vertical supports. However, small portions of other materials can be present, e.g. made from metal, e.g. for allowing to connect other components such as the supporting wires. Using wood may in particular be advantageous to reduce the environmental footprint of the system. Wood is biodegradable and requires less energy (and emissions) for production than e.g. metal supports. Moreover, wood may be present relatively close to the location where the system is installed, e.g. when the system is installed on an agricultural field. This reduces cost and emissions for transportation of the vertical supports. Another advantage of using wooden vertical supports is that the visual impact is reduced. Using wood has a more natural visual effect, in particular when the system is used on a natural setting such as on an agricultural field.

In embodiments, the first and second vertical supports comprise an inground bottom region configured to be arranged into a ground below ground level. By arranging the inground bottom region into the ground, the stability of the system can be provided. How long the inground bottom region is and how deep into the ground it is arranged, may depend on the constructional factors such as height of the system and thickness/strength of the components, as well as expected loads (e.g. due to wind) on the system. The inground bottom region can e.g. be configured to be arranged into the ground by ramming or by first making (e.g. drilling) a hole into the ground.

In embodiments, the first and second vertical supports are configured to be connected to a foundation. The foundation can e.g. be a screw-foundation configured to be screwed into the ground. The details of the foundation may also depend on constructional factors and expected loads.

In embodiments, the first and second supporting wire are steel wires, optionally made of stainless steel or galvanized steel. Steel wires may be able to withstand relatively large forces.

In embodiments, the first and second supporting wire have a diameter of at least 6 mm, optionally at least 8 mm. It will be understood that the diameter may depend on the quantity of solar panels to be supported and their weight and size, as well as the expected wind loads. However, at least 6 or at least 8 mm have been found to be generally satisfying in most expected load scenarios.

In embodiments, the first and/or second supporting wire may be configured to be movable relative first and second vertical support, for example up to a predetermined angle, e.g. up to 10 degrees, e.g. up to 5 degrees, e.g. up to 2 degrees. Said moving may e.g. be in horizontal direction. Said moving may e.g. be in vertical direction. Said moving may e.g. be in in all directions. These embodiments may be advantageous as it allows small movements of the solar panel due to wind forces to reduce to load and internal stresses, while at the same time avoiding that the solar panel is taken too much out of position.

In embodiments, the system comprises a first wire mast configured to be connected to a first end of the first and/or second supporting wire, and a second wire mast configured to be connected to a second end of the first and/or second supporting wire. Optionally, the first and second wire mast are configured to be arranged partly into the ground, e.g. having a screw-end configured to be screwed into ground. Optionally, the first and second supporting wire are configured to extend through the first and second vertical support. Optionally, the first and second vertical support are arranged between the first and second wire mast.

In embodiments, the solar panel is configured to be arranged in landscape arrangement.

In embodiments, the solar panel is configured to be arranged in portrait arrangement.

In embodiments, the system comprises more than two vertical supports, e.g. more than five vertical supports, e.g. more than seven vertical supports, e.g. more than ten vertical supports.

In embodiments wherein the system comprises more than two vertical supports, the first (and optionally the second) support wire may extend between further vertical supports, e.g. between the second vertical support and a third vertical support, e.g. further between the third vertical support and a fourth vertical support, and so on. In other embodiments, it is possible that a third (and optionally fourth) support wire extend between the second vertical support and a third vertical support, and optionally a fifth (and optionally sixth) support wire extend between a third vertical support and a fourth vertical support.

In embodiments, the system further is configured to support a plurality of solar panels (e.g. at least two, at least three, or at least four) between the first supporting wire and the second supporting wire, e.g. (by the part of the first supporting wire extending) between the first and the second vertical support.

In embodiments, the system is configured to be arranged on an agricultural field. It may in particular be advantageous is the solar panels are arranged in the vertical position on the agricultural field with the present invention. In the vertical position, less ground surface is required, and thus more ground surface can be used for the agricultural purposes. The agricultural field may e.g. be for growing crops, preferably low growing crops. High-growing crops such as corn may block solar radiation from coming onto the solar cells. The agricultural field may e.g. be for livestock, wherein optionally the system comprises a protection fence arranged around the system. The protection fence may protect the solar panels from being damaged by the livestock.

In embodiments, the system may be configured to be used as wind breaker. Conventionally, trees may be planted to break winds on strategic locations. It is envisaged that the system may be used of this purpose, wherein the solar panels are configured to break the wind.

It can be seen that in some embodiments of the invention, the way the (first) upper and/or lower clamp are embodied, may provide particular advantages. The invention may also relate to a clamp as such. That is, the invention may relate to:

A clamp for connecting a solar panel to a supporting wire, comprising: a wire opening for the first supporting wire to extend through, and a panel clamping section, configured to clamp an upper or lower surface of a solar panel.

This clamp can e.g. function as a first (or second or further) upper clamp and/or as a first (or second or further) upper clamp in a system as explained above. Any of the advantages explained herein with reference to the upper and/or lower clamp can hence also be achieved with this clamp. Any of the features explained herein with reference to the upper and/or lower clamp can hence also be added to this clamp.

Possible embodiments of the clamp will be elaborated on in the following sections. It will be understood that these embodiments can be applied to the clamp as such, as well as to a first (or second or further) upper clamp and/or as a first (or second or further) upper clamp in a system as explained above.

In embodiments, the clamp comprises a wire tightening means for adapting the size of the wire opening. The wire tightening means may e.g. be configured to adapt a wire clamping force exerted onto the supporting wire. The wire tightening means may e.g. be configured to control the relative position of two or more elements defining the wire opening. The wire tightening means may e.g. comprise at least one connection means, e.g. comprising a bolt and nut. The connection means may e.g. be configured to control the relative position of said two or more elements, e.g. arranging them closer or further from each other.

In embodiments, the wire tightening means are configured to open the wire opening, e.g. for arranging the supporting wire in the wire opening and taking the supporting wire out of the wire opening. For example, the wire can be removed from the clamp. These embodiments are advantageous because they allow to replace, add, or remove clamps in an already installed system. That is, the supporting wire does not need to be loosened from e.g. the vertical supports.

In embodiments, the panel clamping section comprises a panel contact surface configured to engage the upper or lower surface of the solar panel. The panel clamping section may further comprise a first clamping leg and a second clamping leg. The first clamping leg may e.g. comprise a first upstanding surface and the second clamping leg may e.g. comprise a second upstanding surface. The first and second upstanding surface may extend parallel to each other and perpendicular to the panel contact surface. The first upstanding surface is configured to contact one of the front and rear surface of the solar panel, and the second upstanding surface is configured to contact the other of the front and rear surface of the solar panel.

In embodiments, the first upstanding surface may extend further from the panel contact surface than the second upstanding surface. For example, the first upstanding surface may be at least 1.3 times larger than the second upstanding surface, e.g. at least 1.5 times, e.g. at least 1.7 times, e.g. at least 2 times. When the clamp is used for bifacial solar panels, this may in particular be advantageous because such solar panels may have a frame that is larger on a rear side of the solar panel than on a front side of the solar panel. These embodiments may also be advantageous when the solar panel is arranged in a tilted position rather than a vertical position. In that case, the larger first upstanding ridge may be configured to be arranged below the solar panel and support more of the weight.

In embodiments, the panel contact surface may have a width, e.g. measured between (and perpendicular to) the first and second upstanding surface, between 20-50 mm, e.g. between 25-40 mm, e.g. approximately 30 mm or approximately 35 mm.

In embodiments, the first and second upstanding surface may have a height (seen in direction perpendicular to the panel contact surface) of 20 mm or less, e.g. 15 mm or less, e.g. 10 mm or less. As these surfaces come into contact with the front and rear surface of the solar panel, they may block solar radiation coming onto the solar cells if they are too large.

In embodiments, the clamp comprises a panel tightening means for adapting the clamping force of the panel clamping section on the solar panel. The panel tightening means may e.g. be configured to control the position of the first and second upstanding surface relative to each other. The panel tightening means may e.g. be configured to force the first and second clamping leg closer to or further from each other.

In embodiments, the clamp comprises the wire tightening means and the panel tightening means.

In embodiments, the wire tightening means and the panel tightening means are configured to be controlled independent of each other. Thus, the wire tightening means can be used to adapt the size of the wire opening without affecting the clamping force of the panel clamping section on the solar panel. The panel tightening means can be used to adapt the clamping force of the panel clamping section on the solar panel without affecting the wire opening. Said controlling can e.g. be done manually by an operator.

In embodiments, the clamp is configured to be moveable relative to the supporting wire. For example, the clamp can be configured to be moved in rotational direction (e.g. up to 0.5 degrees) relative to the supporting wire. In addition or alternatively, the clamp can be configured to be able to slide relative to (and thus over) the supporting wire. These embodiments may be advantageous to reduce the impact of wind forces, as the solar panel can move slightly, which reduces internal stresses. These embodiments can e.g. be achieved by the wire tightening means controlling the size of the wire opening accordingly.

In embodiments, the wire tightening means comprises a screw or bolt, which is configured to reduce the wire opening without coming into contact with the wire.

In embodiments, the clamp comprises a main part having a first surface extending in a first plane, wherein the first surface comprises at least two openings. The clamp further comprises a U-shaped member. The U-shaped members comprises two legs and a curved section between the two legs. The two legs extend through the two opening of the first surface. The wire opening is at least partially defined by the curved section. The wire tightening means is configured to adapt the wire opening by moving the two legs through the two openings in a direction parallel to the first plane. Optionally, the wire tightening means comprises two nuts arranged on the two legs of the U-shaped member. Optionally the two nuts and the two legs comprise a screw thread.

Optionally the clamp further comprises a counter-member with a curved section, wherein said counter-member is attached to the main part, wherein the curved section of the counter-member and the curved section of the U-shaped member defines the wire opening.

In embodiments, the panel clamping section comprises a panel contact surface configured to be arranged against the upper or bottom surface of the solar panel; the panel clamping section further comprises a first upstanding surface and a second upstanding surface, extending parallel to each other and perpendicular to the panel contact surface, wherein the first and second upstanding surface are configured to extend parallel to the front and rear surface of the solar panel, wherein the first upstanding surface is configured to contact one of the front and rear surface of the solar panel, and the second upstanding surface is configured to contact the other of the front and rear surface of the panel; wherein the clamp comprises a main part comprising the panel contact surface, and the first upstanding surface; wherein the clamp comprising a clamping plate comprising the second upstanding surface; wherein the panel tightening means is configured to move the first and second upstanding surface closer to each other by moving the clamping plate relative to the main part for clamping to solar panel. By moving the clamping plate closer, the clamping force can be increased. These embodiments are furthermore advantageous because tolerances in the size of the (frame of the) solar panel can be compensated by adapting the position of the clamping plate.

In embodiments, the clamp comprises a panel clamping section. The panel clamping section comprises a panel contact surface configured to be arranged against the upper or bottom surface of the solar panel. The clamping section further comprises a first upstanding surface and a second upstanding surface, extending parallel to each other and perpendicular to the panel contact surface. The first and second upstanding surface are configured to extend parallel to the front and rear surface of the solar panel. The first upstanding surface is configured to contact one of the front and rear surface of the solar panel, and the second upstanding surface is configured to contact the other of the front and rear surface of the panel. The panel tightening means is configured to move the first and second upstanding surface closer to each other for clamping to solar panel. By moving the first and second upstanding surface closer, the clamping force can be increased. These embodiments are furthermore advantageous because tolerances in the size of the (frame of the) solar panel can be compensated by adapting the position of the first and/or second upstanding surface.

Optionally, the clamp comprises a main part having a first surface extending in a first plane, wherein the panel contact surface extends perpendicular to the first plane. Optionally, the first surface, the panel contact surface, and the first upstanding surface are formed by the same element, e.g. unitary/integrally. Optionally, the second upstanding surface is formed by a clamping plate, which is another element. Optionally, the panel tightening means is configured to move the clamping plate, e.g. using an attachment means such as a bolt and nut.

In embodiments, the clamp comprises a second panel clamping section. The panel clamping section is e.g. configured to clamp a lower surface of a first solar panel, and the second panel clamping section is configured to clamp an upper surface of a second solar panel. The second panel clamping section may be embodied similarly as the panel clamping section elaborated on above, but arranged upside down in comparison to said panel clamping section. Optionally, the first surface of the clamp; the panel contact surface and the first upstanding surface of the of the panel clamping section; and the panel contact surface and the first upstanding surface of the of the second panel clamping section; are all formed by the same element, e.g. unitary/integrally. Optionally the clamping plate of the panel clamping section and the clamping plate of the second panel clamping section are separate elements, which can separately be tightened by separate panel tightening mea ns.

In embodiments, a material thickness of the clamp may be at least 2 mm, e.g. at least 3 mm, e.g. at least 4 mm.

In embodiments, an overall size of the clamp may be at least 80 mm.

In embodiments, the solar panels have a rectangular front surface and rectangular rear surface. In embodiments, a length of the solar panel (in longitudinal direction) may be between 1.5-3 m, e.g. between 1.5-2.5 m, e.g. approximately 2 m.

The invention further relates to methods for constructing a system for supporting at least one solar panel. Although the methods can be used to construct the system according to the invention; neither the system, nor the methods are limited thereto. Features explained herein with reference to the system and/or clamp have the same meaning with respect to the methods unless explicitly defined otherwise. Features explained with reference to the systems and/or clamp can be applied mutatis mutandis to the methods to achieve the similar advantages, and vice versa.

One or more objects of the invention can be achieved with a method for constructing a system for supporting at least one solar panel (optionally in a vertical position), wherein method comprises constructing a system according to any of the embodiments described herein, wherein the method e.g. comprises a step of arranging a first supporting wire in the wire opening of a first upper clamp and/or e.g. clamping an upper surface of a solar panel with the panel clamping section of the first upper clamp.

One or more objects of the invention can be achieved with a method for constructing a system for supporting at least one solar panel (optionally in a vertical position), wherein method comprises constructing a system comprising a clamp according to any of the embodiments described herein, wherein the method e.g. comprises a step of arranging a supporting wire in the wire opening and/or e.g. clamping an upper of lower surface of a solar panel with the panel clamping section.

One or more objects of the invention can be achieved with a method for constructing a system for supporting at least one solar panel (optionally in a vertical position), wherein method comprises a step of
- arranging a first supporting wire through a wire opening of at least a first upper clamp, wherein the first supporting wire optionally extends between a first vertical support and a second vertical support;
- arranging a second supporting wire through a wire opening of at least a first lower clamp, the second supporting wire optionally extending between the first vertical support and the second vertical support, wherein optionally the second supporting wire extends substantially parallel to the first supporting wire, and optionally is arranged substantially below the first supporting wire;
- clamping an upper surface of the solar panel with a panel clamping section of the first upper clamp;
- clamping a lower surface of the solar panel with a panel clamping section of the first lower clamp.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig. 1a: schematically illustrates a system for supporting solar panels in a vertical position in front view;
Fig. 1b: schematically illustrates a part of the system in top view;
Fig. 1c: schematically illustrates a part of the system enlarged in front view;
Fig. 2: schematically illustrates another embodiment of a system for supporting solar panels in a vertical position in front view;
Fig. 3a and 3b: schematically illustrate a first embodiment of a clamp for connecting a solar panel to a supporting wire;
Fig. 4a and 4b: schematically illustrate a second embodiment of a clamp for connecting a solar panel to a supporting wire;
Fig. 5a and 5b: schematically illustrate a third embodiment of a clamp for connecting a solar panel to a supporting wire;
Fig. 6a, 6b, and 6c: schematically illustrate a fourth embodiment of a clamp for connecting a solar panel to a supporting wire;
Fig. 7a, 7b, and 7c: schematically illustrate a fifth embodiment of a clamp for connecting a solar panel to a supporting wire.

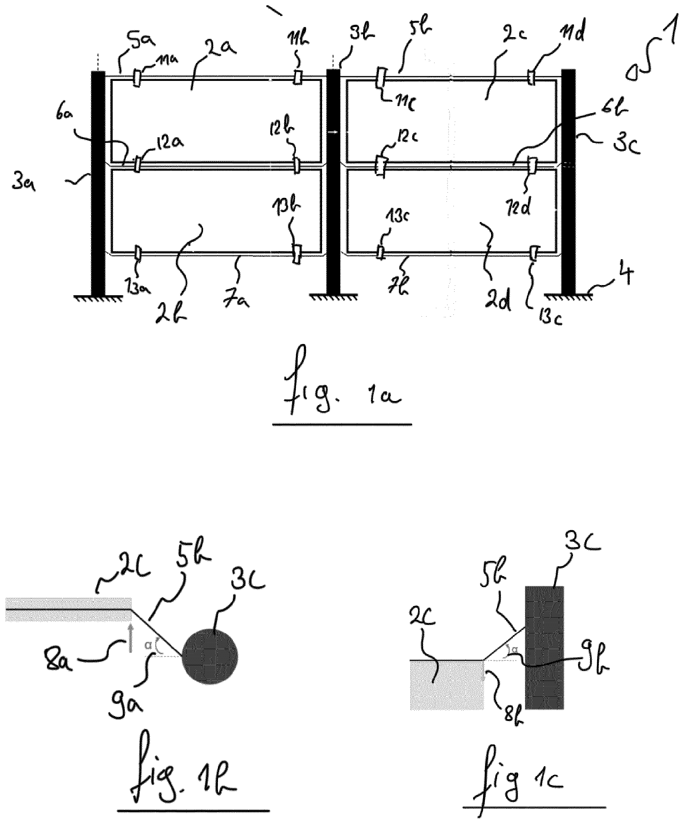

Fig. 1a schematically illustrates a system 1 for supporting solar panels 2a, 2b, 2c, 2d in a vertical position. The system 1 comprises a first vertical support 3a, a second vertical support 3b, and a third vertical support 3c. The vertical supports 3a-3c are made of wood. The vertical supports 3a-3c are arranged on a ground surface 4, which in this case is an agricultural field 4.

A first supporting wire 5a extends between the first and second vertical support 3a, 3c. A second supporting wire 6a also extends between the first and second vertical support 3a, 3c. Furthermore, a third supporting wire 7a also extends between the first and second vertical support 3a, 3c. The first, second, and third supporting wire 5a, 6a, 7a, substantially extend parallel to each other, in particular in the horizontal direction which in fig. 1a extends from left to right. Moreover, the second supporting wire 6a is arranged below the first supporting wire 5a and above the third supporting wire 7a. This arrangement allows to support a first solar panel 2a between the first and second supporting wire 5a, 6a; and a second solar panel 2b between the second and third supporting wire 6a, 7a. The solar panels 2a, 2b can as such be supported in a vertical position. The supporting wires can be made from steel, e.g. stainless steel, or galvanized steel.

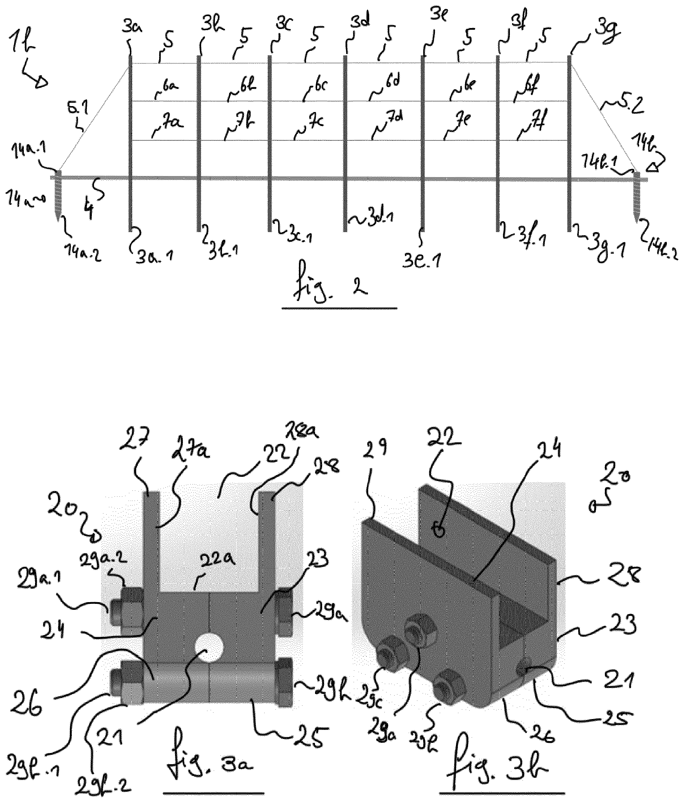

Fig. 1a schematically shows a plurality of clamps. Clamps 11a and 11b connect the first solar panel 2a to the first supporting wire 5a. Clamps 12a and 12b connect the first solar panel 2a and the second solar panel 2b to the second supporting wire 6a. Clamps 13a and 13b connect the second solar panel 2b to the third supporting wire 7a. The clamps are indicated schematically in fig.1a, but can be embodied according to any of the embodiments described herein, e.g. a shown in any of the figures 3a-7c.

The clamps 11a and 11b function as first upper clamp 11a and second upper clamp 11b for the first solar panel 2a. The clamps 12a and 12b function as first lower clamp 12a and second lower clamp 12b for the first solar panel 2a, but as first upper clamp 12a and second upper clamp 12b for the second solar panel 2b. The clamps 13a and 13b function as first lower clamp 13a and second lower clamp 13b for the second solar panel 2b.

Between the second and third vertical support 3b, 3c, further supporting wires 5b, 6b, 6c extend, which support further solar panels 2c, 2d via clamps 11c, 11d, 12c, 12d, 13c, 13d. It will be understood that this functions according to similar principles as explained for the first and second solar panel 2a,2b. It will furthermore be understood that in practice the system 1 can be larger to support even more solar panels. The system can e.g. have more than three vertical supports 3a-3b. It is also possible to adapt the configured such that e.g. between the first and second supporting wire 5a, 6a between the first and second vertical support 3a, 3b, more than only the first solar panel 2a is supported. Instead, e.g. two or more solar panels can be supported. Another possible variation of the embodiment shown in fig. 1a is that the solar panels 2a-2d can be arranged on portrait arrangement (with longitudinal axis extending in vertical direction) instead of landscape (with longitudinal axis extending in horizontal direction - as shown in fig. 1a).

The shown system 1 results in the solar panels 2a-2d being arranged in vertical position. The solar panels 2a-2d can e.g. be bifacial solar panels. Bifacial solar panels can comprise bifacial solar cells, which can convert solar radiation to electricity, when said solar radiation is received on the front side (visible side in fig. 1a) or on the rear side (not visible in fig. 1a). Such solar panels 2a-2d are advantageous because they are productive for a large time during the day, especially when arranged vertically as shown in fig.1a. The system 1 is furthermore advantageous, because the supporting wires can be made relatively thin, when compared to traditional supporting rails or bars. The supporting wires generate less shadow, thereby increasing productivity of the solar panels arranged on a row before or behind the shown solar panels 2a-2b. Moreover, the weight is reduced, which is beneficial for transport etc.

Furthermore, the supporting wires can be moveable relative to the vertical supports 3a, 3b, 3c, up to a predetermined angle, e.g. 10 degrees, e.g. up to 5 degrees, e.g. up to 2 degrees. Fig. 1b is a top view of a part of the system 1. Fig. 1b illustrates that the supporting wire 5b is moveable in horizontal direction, in this case by an angle 9a. Said movement is caused by wind forces 8a, which exert in horizontal direction on the solar panel 2c. The ability to move, thus allows the solar panel 2c to be moved slightly by the wind force 9a. This reduces the internal stresses in various components of the system 1. At the same time, the arrangement of clamping the solar panel 2c from above and below ensures that the solar panel 2c remains substantially vertical.

Fig. 1c illustrates a part of the system 1 in front view, but enlarged. It can be seen that the supporting wire 5b also has ability to move in vertical direction, in this case by an angle 9b. This movement is caused by the gravitational force 8b due to the weight of the solar panel 2c.

In fig. 1a it can be seen that each solar panel 2a-2d is clamped by four respective clamps 11a-d, 12a-d, 13a-d. However, more or less clamps can be envisaged, depending on the expected loads (e.g. depending on number, size, and weight of the solar panels). In the shown arrangement, the four clamps 11a-d, 12a-d, 13a-d per solar panel 2a-2d engage symmetrically on the respective solar panel 2a-2d. This may be advantageous for the distribution of loads and stresses.

Fig. 2 illustrates system 1b to support a plurality of solar panels, although in this view the solar panels are not yet installed and thus not visible. The system 1b is in many ways similar to the system shown in fig. 1a-1b, such that the following explanation will not repeat everything.

The system 1b comprises a plurality of vertical supports 3a, 3b, 3c, 3d, 3e, 3f, 3g, and can thus support a plurality of solar panels. Three "levels" of supporting wires are provided. At the bottom level, supporting wires 7a, 7b, 7c, 7d, 7e, 7f extend between subsequent vertical supports. Also at the middle level, supporting wires 6a, 6b, 6c, 6d, 6e, 6f extend between subsequent vertical supports. In these cases, it is possible that for each supporting wire part 6a-6f, 7a-7f, a one end is attached to a first vertical support and the other (opposite) end is attached to a second (subsequent) vertical support. It is also possible that the supporting wire parts 6a-6f are part of a single (long) supporting wire, having one end attached to vertical support 3a and the other (opposite) end attached to the vertical support 3g. In that case, the other vertical supports 3b-3f may have supporting wire openings through which the supporting wire extends.

The upper level has a single supporting wire 5. All of the vertical supports 3a-3g have a supporting wire opening through which the supporting wire 5 extends. The system 1b comprises a first wire mast 14a and a second wire mast 14b. The first wire mast 14a is connected to a first wire end 5.1. The second wire mast 14b is connected to a second wire end 5.2. The ends of the supporting wire 5 are wind around the respective wire mast 14a,b, and partially arranged into the ground below the ground surface 4. For this, the wire masts 14a,b have a above-ground part 14a.1, 14b.1 and an inground part 14a.2, 14b.2. it can further be seen that the vertical supports 3a-3g arranged between the first and second wire mast 14a, 14b.

Fig. 2 further illustrates that each vertical support 3a-3g comprises an inground bottom region 3a.1-3g.1. These are arranged below the ground level 4, e.g. being rammed into the ground, and provide stability to the vertical supports 3a-3g.

Fig. 3a-3b schematically illustrate a first embodiment of a clamp 20. The clamps illustrated in fig. 1a can e.g. be embodied as the clamp 20 shown in fig. 3a-3b. The clamp 20 comprises a wire opening 21 and a panel clamping section 22. The shown clamp 20 further comprises a first part 23, a second part 24, a third part 25, and a fourth part 26. A first connection means 29a (having a bolt 29a.1 and a nut 29a.2) can be used to tighten the first part 23 and second part 24 to each other. A second connection means 29b (with bolt 29b.1 and nut 29b.2) and a second connection means (also wilt bolt and nut) can be used to tighten the third 25 and fourth part 26 to each other.

The wire opening 21 can be arranged around a desired supporting wire. The four parts 23-26 together delimited the wire opening 21 in the embodiment of fig. 3a-3b. By using the connection means 29a-c, the wire opening 21 can be made smaller or bigger. The connection means 29a-c together with the four parts 23-26 thus function as wire tightening means. The wire opening 21 can in particular be made larger and even opened, such that a supporting wire can be arranged in the wire opening 21 or taken out of it. This is advantageous as it allows to replace, remove, or add a clamp 20 to system for supporting a solar panel, without requiring large reconstruction. Indeed, an existing supporting wire would not have to be loosened or removed from the system.

The panel clamping section 22 comprises a panel contact surface 22a. The panel contact surface 22a is configured to come into contact with the upper surface of the solar panel (when the clamp is used as upper clamp) or the lower surface of the solar panel (when the is used as lower clamp). The panel clamping section 22 further comprises a first clamping leg 27 and second clamping leg 28. The first clamping leg 27 has a first upstanding surface 27a. The second clamping leg 28 has a second upstanding surface 28a. The first and second upstanding surface 27a, 28a extend parallel to each other, but perpendicular to the panel contact surface 22a. The first and second upstanding surface 27a, 28a are configured to engage a front and rear surface of the solar panel, respectively.

In practice, the panel clamping section 22 can be arranged around an upper section or lower section of the solar panel. At that moment, the first connection means 29a can still be relatively loose, so that the first and second clamping leg 27, 28 are at a further distance from each other. The upper or lower surface of the solar panel is brought into contact with the panel contact surface 22a. Then, the first connection means 29a is tightened, such that the first and second clamping leg 27, 28 are brought closer to each other and exert a clamping force on the solar panel. This system thus functions as a panel tightening means.

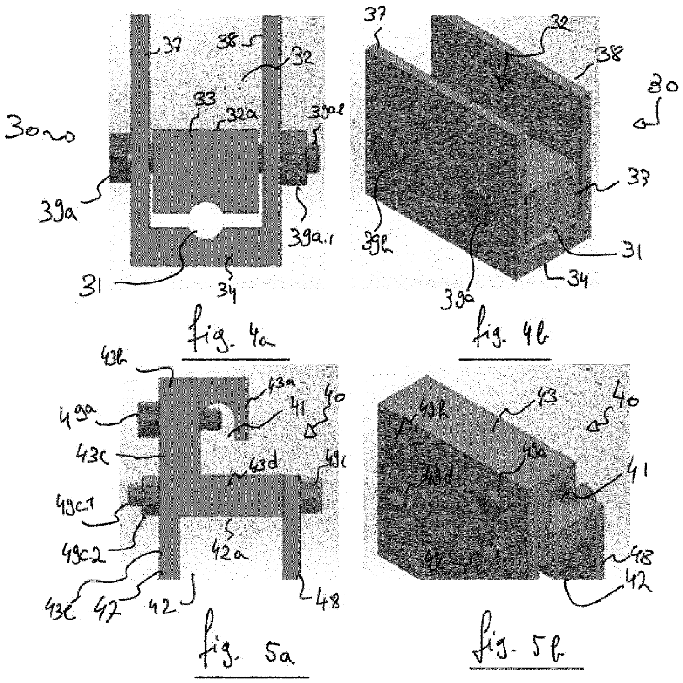

Fig. 4a-4b schematically illustrate another embodiment of a clamp 30. The clamps illustrated in fig. 1a can e.g. be embodied as the clamp 30 shown in fig. 4a-4b. The clamp 30 comprises again a wire opening 31 and a panel clamping section 32. The panel clamping section 32 has a panel contact surface 32a, a first clamping leg 37, and a second clamping leg 38.

The clamp 30 comprises a first part 33 and a second part 34. The wire opening 31 is formed between the first and second part 33, 34. A first connection means 39a (with bolt 39a.2 and nut 39a.1) and second connection means 39b (with bolt and nut) can be used to reduce or enlarge the moveability of the first part 33 relative to the second part 34. The first and second clamping leg 37, 38 are part of the second part 34 in the shown example. The first and second connection means 33, 34 can also be used to bring the first and second clamping leg 37, 38 closer to each other. This allows to clamp the solar panel in similar ways as explained with reference to the clamp 20 shown in fig. 3a-3b.

Fig. 5a-5b schematically illustrate another embodiment of a clamp 40. The clamps illustrated in fig. 1a can e.g. be embodied as the clamp 40 shown in fig. 5a-5b. The clamp 40 comprises again a wire opening 41 and a panel clamping section 42. The panel clamping section 42 has a panel contact surface 42a, a first clamping leg 47, and a second clamping leg 48.

In this example the clamp 40 is made of first part 43 having a first wire opening leg 43a, a second wire opening leg 43b, and a third wire opening leg 43c. A panel section leg 43d extends from the third wire opening leg 43c. The panel section leg 43d comprises the panel contact surface 42a. A second panel section leg 43e comprises the first clamping leg 47. The second clamping leg 48, however, is formed by a second part 48. The second part 48 is embodied as a plate in this example.

A first tightening means 49a and a second tightening means 49b can be used to reduce or enlarge the available space for the supporting wire in the wire opening 41. This function as such as wire tightening means. It can be seen that the wire opening 43a is always open on what in the shown figures is the lower end of the wire opening 41. This is advantageous to insert a wire or remove a wire from the wire opening 41. Or in other words, to add or remove a clamp 40 from a supporting wire without the need to disconnect the supporting wire.

A third connection means 49c (with bolt 49c.1 and nut 48c.2) and a fourth connection means 49d (also with bolt and nut) allow to connect/disconnect and/or tighten/loosen the second part 48 from the first part 43. As such, the second clamping leg 48 can be brought closer to the first clamping leg 47 to increase the clamping force on the solar panel. This function as such as panel tightening means. The solar panel can be introduced into the panel clamping section 42 in similar ways as explained above with reference to previous figures.

A particular advantage of the embodiment shown in fig. 5a-5b is that the wire tightening means and the panel tightening means can be controlled independently of each other. This enables for example to first connect the clamp 40 to the supporting wire, and the connect the solar panel to the required clamps. It can also be possible to connect the clamps first to the solar panel, and then to the required supporting wires.

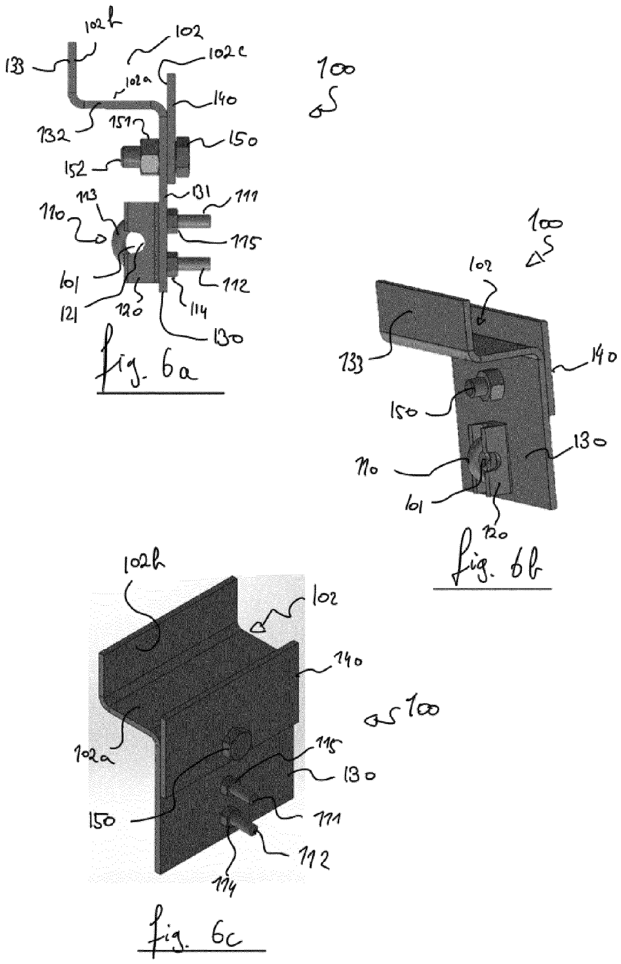

Fig. 6a-6c schematically illustrate another embodiment of a clamp 100. The clamps illustrated in fig. 1a can e.g. be embodied as the clamp 100 shown in fig. 6a-6c. The clamp 100 comprises again a wire opening 101 and a panel clamping section 102. The panel clamping section 102 has a panel contact surface 102a, a first clamping leg 133, and a second clamping leg 140.

The clamp 100 comprises a main part 130 having a first surface 131 extending in a first plane. The clamp 100 further comprises a U-shaped member 110. The U-shaped members 110 comprises two legs 111,112 and a curved section 113 between the two legs 111,112. The two legs 111,112 extend through two opening of the first surface 113. The wire opening 101 is partially defined by the curved section 113. The clamp 100 further comprises a counter-member 120 with a curved section 121. Said counter-member 120 is attached to the main part 130, The curved section 121 of the counter-member 120 and the curved section 113 of the U-shaped member 110 define the wire opening 101.

The wire tightening means is configured to adapt the wire opening 101 by moving the two legs 111,112 through the two openings in a direction parallel to the first plane. In particular, the wire tightening means comprises two nuts 114, 115 arranged on the two legs 111, 112 of the U-shaped member 110. The two nuts 114, 115 and the two legs 11, 112 comprise screw thread, allowing to reduce or enlarge the wire opening 101.

The panel clamping section 102 comprises the panel contact surface 102a, which is configured to be arranged against the upper or bottom surface of the solar panel. The clamping section 102 further comprises a first upstanding surface 102b and a second upstanding surface 102c, extending parallel to each other and perpendicular to the panel contact surface 102a. The first 102b and second upstanding surface 102c are configured to extend parallel to the front and rear surface of the solar panel. The first upstanding surface 102b is configured to contact one of the front and rear surface of the solar panel, and the second upstanding surface 102c is configured to contact the other of the front and rear surface of the panel.

The first upstanding surface 102b is part of the first clamping leg 133, which is part of the main part 130. The second upstanding surface 102c is part of the second clamping leg 140, which embodied as a clamping plate 140. The clamping plate 140 is a separate element from the main part 130. A connection means 150 with bolt 152 and nut 151 is provided for connecting the clamping plate 140 and the main part 130. This function as panel tightening means, being configured to move the first and second upstanding surface 102b, 102c closer to each other for clamping to solar panel by exerting a clamping force. It will be understood that the solar panel can be arranged in panel clamping section and clamped therein in similar ways as explained with reference to previous figures. The fact that the position of the second clamping leg 140 can be controlled relative to the first clamping leg 133, also has the advantage that tolerances in the (frame of the) solar panel can be compensated this way.

In the shown example, the panel contact surface 102a extends perpendicular to the first plane in which the first surface 131 extends. The first surface 131, the panel contact surface 102a, and the first upstanding surface 102b (and the first clamping leg 133) are unitary/integrally formed by the same element, being the main part 130. The second upstanding surface 102c is formed by a clamping plate 140, which is another element.

The panel contact surface 102a may e.g. have a width (measured between the first 102b and second upstanding surface 102c) of 30 mm or 35 mm. The first upstanding surface 102b may e.g. have a height of 10 mm. The second upstanding surface 102c may e.g. have a height of 5 mm. It will be understood, however, that these dimensions can be adapted in function of the specifications of the (frame of the) solar panel. In general, however, the first upstanding surface 102 may extend further from the panel contact surface 102a than the second upstanding surface 102b, seen in vertically upwards direction in fig. 6a. This may be advantageous for bifacial solar panels, which can have a frame that is larger on one side compared to the other side.

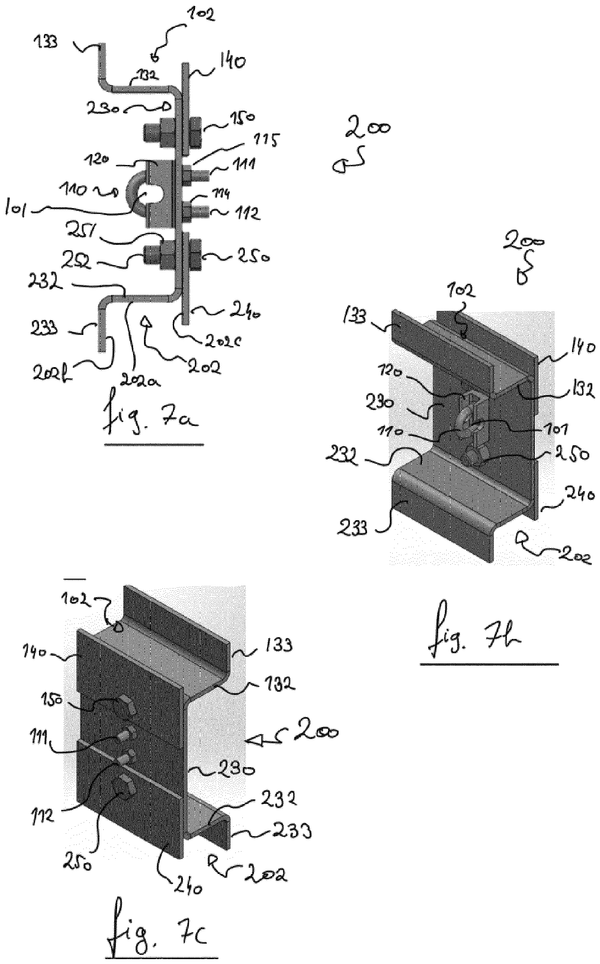

The embodiment shown in fig. 6a-6c has several advantages. Firstly, the wire tightening means and the panel tightening means can be controlled independently of each other, achieving advantages as explained above. Secondly, the screw/nut 111, 112, 114,115 elements of the wire tightening means are able to reduce the wire opening 101 without coming into contact with the supporting wire. This reduces friction between the supporting wire and the clamp 100. Moreover, it enables to allow slight movement of the clamp 100 (and thus solar panel) relative to the supporting wire. Such movement can e.g. be rotational, but also sliding (in horizontal direction). Allowing such movements may reduce the impact of wind loads. Fig. 7a-7c illustrate another embodiment of a clamp 200, which is a variant of the clamp 100 shown in fig. 6a-6c and comprises many of the same features. These features will therefore not be elaborated on in detail below, and not all of them are explicitly indicated with reference numerals in fig. 7a-7c.

The clamp 200 comprises a second panel clamping section 202. This allows to clamp an upper surface of a first solar panel with the panel clamping section 102, and the lower surface of a second solar panel with the second panel clamping section 202 (or vice versa). The clamp 200 can thus e.g. be used as clamps 12a-d shown in fig. 1a.

The second panel clamping section 202 is embodied similar as the panel clamping section 102, but arranged upside down in comparison to sain panel clamping section 102. In particular, a main part 230 comprises the panel contact surface 132 and the first clamping leg 133 of the panel clamping section 102. The main part 230 also comprises the panel contact surface 232 and the first clamping leg 233 of second the panel clamping section 202. A first upstanding surface 202b is part of the first clamping leg 233. The main part 230 and all the elements it comprises are made unitary/integrally.

A second clamping plate 240 is provided, defining the second clamping leg 240 and the second upstanding surface 202c for the second panel clamping section 202. A second connection means 250 with bolt 252 and nut 251 is provided for connecting the second clamping plate 240 and the main part 230. This functions as second panel tightening means, which can be controlled independently of the panel tightening means for panel clamping section 102 and independently of the wire tightening means.

For the various clamps described herein and/or shown in the figures, it may advantageous if the first and second clamping leg and/or the first and second upstanding surface are as small as possible. Since they come into contact with the front and rear surface of the solar panel, they may otherwise block too much of the solar cells, reducing the productivity of said solar cells. For example, the first and second upstanding surface may have a height (seen in direction perpendicular to the panel contact surface) of 20 mm or less, e.g. 15 mm or less, e.g. 10 mm or less.

Although fig. 1a-1c, 2 illustrate solar panels in vertical position, it will be understood that the invention (in particular the illustrated) clamps are not limited thereto. It is also possible to use the clamps when the solar panel is e.g. tilted. In such cases, it is still possible that an upper clamp clamps an upper surface of the solar panel and a lower clamp a lower surface of the solar panel. The clamps may be tilted at a similar angle as the solar panel, in comparison to the vertical positions shown in the figures. The first and second supporting wire can in those cases be arranged differently, e.g. not being arranges above/below each other. The first and second supporting wire can e.g. extend between different vertical supports.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

## Claims

1. A system (1, 1b) for supporting at least one solar panel in a vertical position, comprising
• a first vertical support (3a),
• a second vertical support (3b),
• a first supporting wire (5a) extending between the first vertical support and the second vertical support,
• a second supporting wire (6a) extending between the first vertical support and the second vertical support, wherein the second supporting wire extends substantially parallel to the first supporting wire and is arranged substantially below the first supporting wire,
• at least a first upper clamp (11a), comprising:
• a wire opening (21, 31, 41, 101) through which the first supporting wire extends, and
• a panel clamping section (22, 32, 42, 102) configured to clamp an upper surface of a solar panel,
• at least a first lower clamp (12a), comprising:
• a wire opening through which the second supporting wire extends, and
• a panel clamping section, configured to clamp a lower surface of the solar panel.

2. The system according to claim 1, further comprising:
• at least a second upper clamp (11b), comprising:
• a wire opening through which the first supporting wire extends, and
• a panel clamping section, configured to clamp the upper surface of the solar panel,
• at least a second lower clamp (12b), comprising:
• a wire opening through which the second supporting wire extends, and
• a panel clamping section, configured to clamp the lower surface of the solar panel.

3. The system according to any of the preceding claims, wherein the first and second vertical support are made from wood.

4. The system according to any of the preceding claims, wherein the first and/or second supporting wire are configured to be movable relative first and second vertical support, for example up to a predetermined angle (9a, 9b), e.g. up to 10 degrees, e.g. up to 5 degrees, e.g. up to 2 degrees.

5. A clamp for connecting a solar panel to a supporting wire, comprising:
• a wire opening for the supporting wire to extend through, and
• a panel clamping section, configured to clamp an upper or lower surface of a solar panel.

6. The system or clamp according to any of the preceding claims, wherein the panel clamping section comprises
• a panel contact surface configured to engage the upper or lower surface of the solar panel;
• a first clamping leg and a second clamping leg, wherein
• the first clamping leg comprises a first upstanding surface
• the second clamping leg comprises a second upstanding
• wherein the first and second upstanding surface extend parallel to each other and perpendicular to the panel contact surface;
• wherein the first upstanding surface is configured to contact one of the front and rear surface of the solar panel, and the second upstanding surface is configured to contact the other of the front and rear surface of the solar panel.

7. The system or clamp according to any of the preceding claims, wherein the clamp comprises:
• a wire tightening means for adapting the size of the wire opening; and
• a panel tightening means for adapting the clamping force of the panel clamping section on the solar panel.

8. The system or clamp according to any of the preceding claims, wherein the wire tightening means and the panel tightening means are configured to be controlled independent of each other.

9. The system or clamp according to any of the preceding claims, wherein the wire tightening means are configured to open the wire opening for arranging the supporting wire in the wire opening and taking the supporting wire out of the wire opening.

10. The system according to any of the preceding claims, wherein the clamp is configured to be moveable relative to the supporting wire.

11. The system or clamp according to any of the preceding claims, wherein the clamp comprises a second panel clamping section, wherein the panel clamping section is configured to clamp a lower surface of a first solar panel, and the second panel clamping section is configured to clamp an upper surface of a second solar panel, wherein optionally the second panel clamping section is embodied similarly as the panel clamping section, but arranged upside down in comparison to said panel clamping section.

12. The system or clamp according to any of the preceding claims, wherein
• the clamp comprises a main part having a first surface extending in a first plane, wherein the first surface comprises at least two openings;
• the clamp comprises a U-shaped member, wherein the U-shaped members comprises two legs and a curved section between the two legs, wherein the two legs extend through the two opening of the first surface;
• wherein the wire opening is at least partially defined by the curved section of the U-shaped member,
• wherein the wire tightening means is configured to adapt the wire opening by moving the two legs through the two openings in a direction parallel to the first plane.

13. The system or clamp according to any of the preceding claims, wherein
• the panel clamping section comprises a panel contact surface configured to be arranged against the upper or bottom surface of the solar panel;
• the panel clamping section further comprises a first upstanding surface and a second upstanding surface, extending parallel to each other and perpendicular to the panel contact surface, wherein the first and second upstanding surface are configured to extend parallel to the front and rear surface of the solar panel, wherein the first upstanding surface is configured to contact one of the front and rear surface of the solar panel, and the second upstanding surface is configured to contact the other of the front and rear surface of the panel;
• wherein the clamp comprises a main part comprising the panel contact surface, and the first upstanding surface
• wherein the clamp comprising a clamping plate comprising the second upstanding surface
• wherein the panel tightening means is configured to move the first and second upstanding surface closer to each other by moving the clamping plate relative to the main part for clamping to solar panel.

14. The system according to claim 12 and claim 13, wherein the main part comprises the first surface, panel contact surface, and the first upstanding surface; wherein the panel contact surface extends perpendicular to the first surface.

15. A method for constructing a system for supporting at least one solar panel, optionally in a vertical position, comprising the following steps:
• arranging a first supporting wire through a wire opening of at least a first upper clamp, wherein the first supporting wire extending between a first vertical support and a second vertical support;
• arranging a second supporting wire through a wire opening of at least a first lower clamp, the second supporting wire, optionally extending between the first vertical support and the second vertical support, wherein optionally the second supporting wire extends substantially parallel to the first supporting wire, and optionally is arranged substantially below the first supporting wire;
• clamping an upper surface of the solar panel with a panel clamping section of the first upper clamp;
• clamping a lower surface of the solar panel with a panel clamping section of the first lower clamp.
